# EUROPEAN PATENT APPLICATION

(11) **EP 4 576 503 A1**
(43) Date of publication of application: **25.06.2025**
(21) Application number: 23885700.7
(22) Date of filing: 30.10.2023
(51) Int. Cl.: H02K 1/276

(54) **ROTOR FOR ROTARY ELECTRIC MACHINE**

(30) Priority: 31.10.2022 JP 2022174078
(71) Applicant: AISIN CORPORATION, Kariya-shi, Aichi 448-8650 (JP)
(72) Inventor: FURUTA, Yasunari, Kariya-shi, Aichi 448-8650 (JP); YAMAGUCHI, Yutaro, Kariya-shi, Aichi 448-8650 (JP)
(74) Representative: Kramer Barske Schmidtchen Patentanwälte PartG mbB
(86) International application number: PCT/JP2023/039032
(87) International publication number: WO 2024/095945

(57) **Abstract**

There is disclosed a rotor for a rotary electric machine including a rotor core in a form of a laminate of a plurality of steel sheets, the rotor core having a magnet hole in an axial direction, and a magnet inserted in the magnet hole in the axial direction, two or more steel sheets adjacent to each other in the axial direction among the plurality of steel sheets include a welded portion that joins the steel sheets to each other, the magnet hole includes a first edge portion that bounds the radially inner core portion, a second edge portion that bounds the radially outer core portion, and a third edge portion that bounds the outer circumferential bridge when viewed in the axial direction, and the welded portion is provided in a flux barrier adjacent to the outer circumferential bridge and on the first edge portion in the magnet hole.

## Description

### TECHNICAL FIELD

The present disclosure relates to a rotor for a rotary electric machine.

### BACKGROUND ART

In a configuration in which an end plate and a rotor core in the form of a laminate of a plurality of steel sheets are joined by welding, a technique of setting a welded portion on the outer circumferential surface of the rotor core is known.

### CITATIONS LIST

### PATENT LITERATURE

Patent Literature 1: JP 2020-114039 A

### SUMMARY OF INVENTION

### TECHNICAL PROBLEMS

Meanwhile, in a rotor core in the form of a laminate of a plurality of steel sheets, the repulsive force generated at an axial end acts in a direction of peeling off the steel sheet at the axial end outward in the axial direction. Therefore, in the rotor core in the form of the laminate of a plurality of steel sheets, it is useful to set a welded portion against such a repulsive force. However, in a case where the welded portion is set near an outer circumferential bridge on the outer circumferential surface of the rotor core, there is a problem that stress in the outer circumferential bridge tends to increase due to thermal contraction in the welded portion.

Therefore, in one aspect, the present disclosure provides a welded portion against a repulsive force in a manner that the influence of stress caused by welding can be reduced.

### SOLUTIONS TO PROBLEMS

According to one aspect, there is provided a rotor for a rotary electric machine including a rotor core in a form of a laminate of a plurality of steel sheets, the rotor core having a magnet hole in an axial direction, and
a magnet inserted in the magnet hole in the axial direction,
two or more steel sheets adjacent to each other in the axial direction among the plurality of steel sheets include a welded portion that joins the steel sheets to each other,
the rotor core includes a radially outer core portion that is located radially outside of the magnet hole and forms an outer circumferential surface of the rotor core, a radially inner core portion that is located radially inside of the magnet hole and has both sides in a circumferential direction extending to the outer circumferential surface of the rotor core, and an outer circumferential bridge that connects the radially outer core portion and the radially inner core portion along an outer circumference of the rotor core,
the magnet hole includes a first edge portion that bounds the radially inner core portion, a second edge portion that bounds the radially outer core portion, and a third edge portion that bounds the outer circumferential bridge when viewed in the axial direction, and
the welded portion is provided in a flux barrier adjacent to the outer circumferential bridge and on the first edge portion in the magnet hole.

### ADVANTAGEOUS EFFECTS OF INVENTION

In one aspect, according to the present disclosure, it is possible to provide the welded portion against a repulsive force in a manner that the influence of stress caused by welding can be reduced.

### BRIEF DESCRIPTION OF DRAWINGS

FIG. 1 is a cross-sectional view schematically illustrating a cross-sectional structure of a motor according to an embodiment.
FIG. 2 is a cross-sectional view of a rotor (a cross-sectional view taken along a plane perpendicular to an axial direction).
FIG. 3 is a cross-sectional view taken along line A-A in FIG. 2.
FIG. 4 is an explanatory diagram of a method of manufacturing a rotor for a rotary electric machine according to the present embodiment.
FIG. 5 is a diagram illustrating a state of a workpiece during an insertion step in the present manufacturing method.
FIG. 6A is an explanatory diagram of a magnet hole forming portion of a steel sheet including a welded portion.
FIG. 6B is an explanatory diagram of a magnet hole forming portion of a steel sheet not including the welded portion.
FIG. 7 illustrates a part of a cross-section of a rotor core taken along line B-B in FIG. 6A.
FIG. 8 is an enlarged view of a part Q4 in FIG. 1.
FIG. 9 is an explanatory diagram of a welded portion according to a comparative example, and is a cross-sectional view illustrating a configuration at one magnetic pole.
FIG. 10 is a contour diagram illustrating a stress analysis result in the present embodiment.
FIG. 11 is an enlarged view of a part of FIG. 6A, and is an explanatory diagram of an end of a radially inner edge portion of a magnet hole.
FIG. 12 is an explanatory diagram of the rotor core formed by rolling a plurality of laminate blocks.

### DESCRIPTION OF EMBODIMENTS

Hereinafter, each embodiment will be described in detail with reference to the accompanying drawings. Note that the dimensional ratios in the drawings are merely examples, and the dimensional ratios are not limited thereto, and shapes and the like in the drawings may be partially exaggerated for convenience of description.

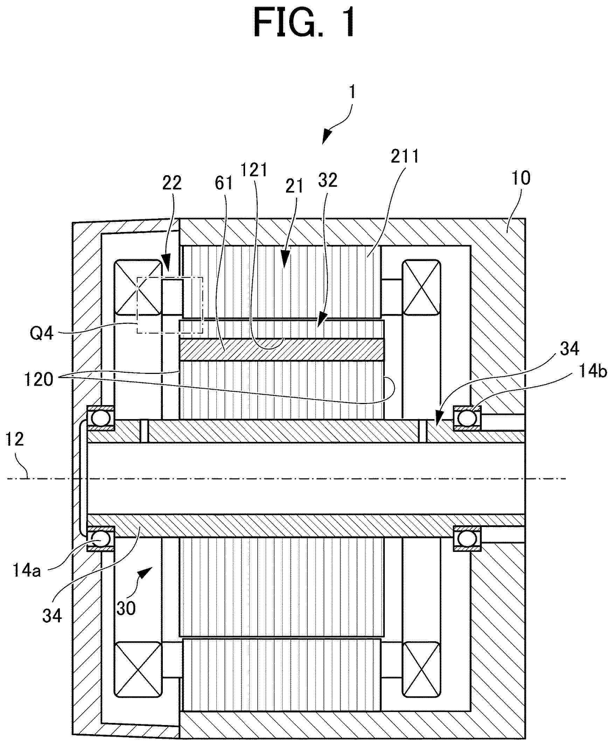

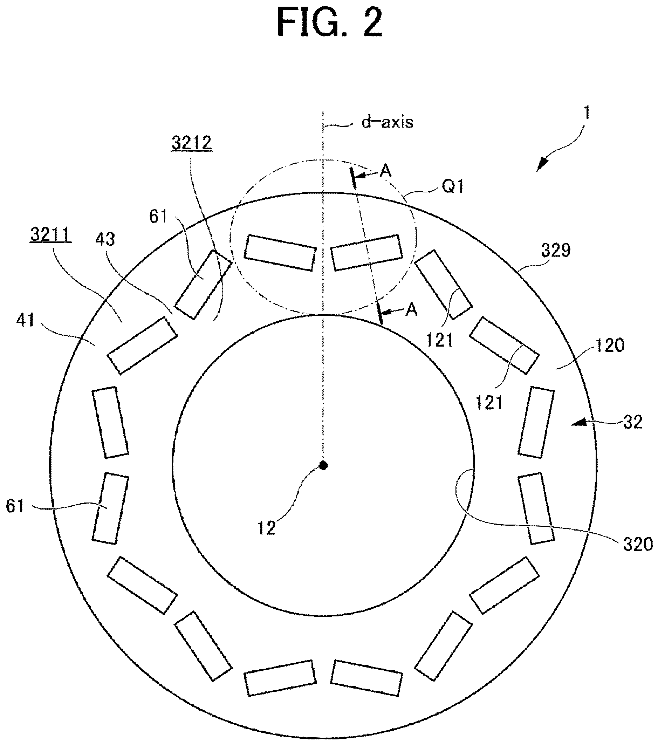

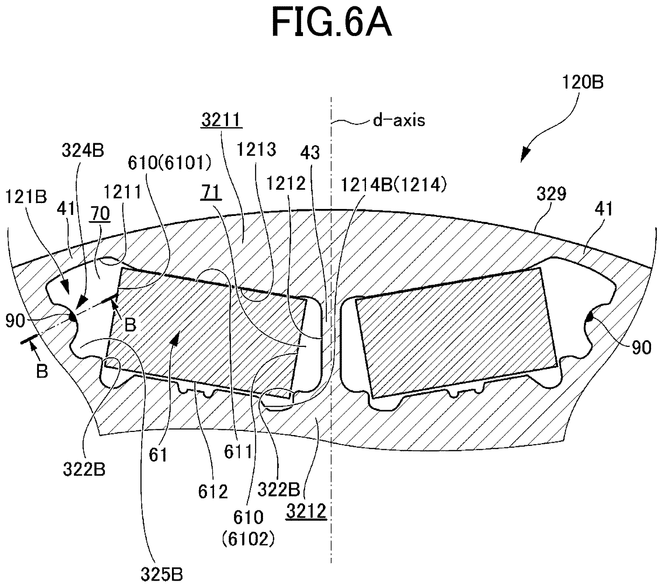

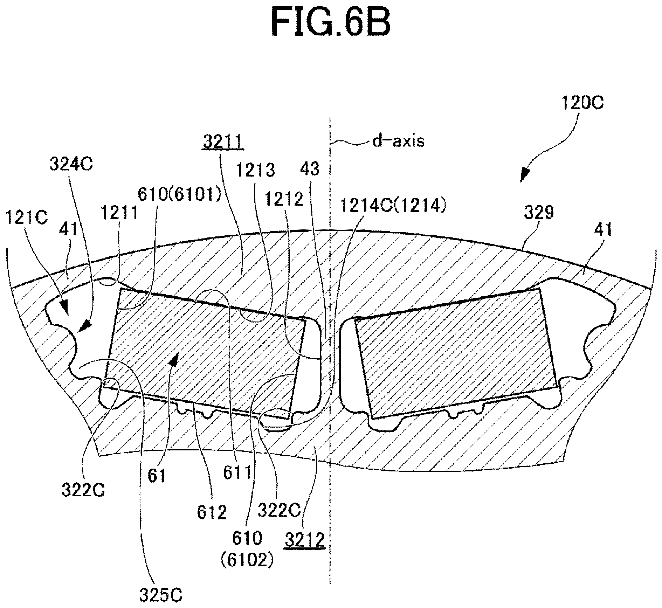

FIG. 1 is a cross-sectional view schematically illustrating a cross-sectional structure of a motor 1 according to an embodiment. FIG. 2 is a cross-sectional view of a rotor 30 (a cross-sectional view taken along a plane perpendicular to an axial direction). Note that, in FIG. 2 and the like, for the sake of visibility, reference numerals may be given to only a part of a plurality of parts having the same attribute. Furthermore, in FIG. 2, the shape and the like of a magnet hole 121 are very schematically illustrated, and the detailed shape will be described later with reference to FIGS. 6A and 6B and the like.

FIG. 1 illustrates a rotation axis 12 of the motor 1. In the following description, the axial direction refers to a direction in which the rotation axis (rotation center) 12 of the motor 1 extends, and the radial direction refers to a radial direction about the rotation axis 12. For this reason, the radially outer side refers to a side away from the rotation axis 12, and the radially inner side refers to a side toward the rotation axis 12. In addition, the circumferential direction corresponds to a rotation direction around the rotation axis 12.

The motor 1 may be, for example, a vehicle drive motor used in a hybrid vehicle or an electric vehicle. The motor 1 may be used for any other application.

The motor 1 is an inner rotor motor, and a stator 21 is provided so as to surround the radially outer side of the rotor 30. The radially outer side of the stator 21 is fixed to a motor housing 10. The stator 21 includes a stator core 211 made of, for example, an annular magnetic laminated steel sheet, and a plurality of slots (not illustrated) around which a coil 22 is wound are formed in the radially inner side of the stator core 211.

The rotor 30 is disposed in the radially inner side of the stator 21.

The rotor 30 includes a rotor core 32, a rotor shaft 34, and a permanent magnet 61.

The rotor core 32 is fixed to the radially outer surface of the rotor shaft 34 and rotates integrally with the rotor shaft 34. The rotor core 32 has a shaft hole 320 (see FIG. 2), and the rotor shaft 34 is fitted into the shaft hole 320. The rotor core 32 may be fixed to the rotor shaft 34 by shrink fitting, press fitting, or the like. For example, the rotor core 32 may be coupled to the rotor shaft 34 by key coupling or spline coupling. The rotor shaft 34 is rotatably supported by the motor housing 10 via bearings 14a and 14b. Note that the rotor shaft 34 defines the rotation axis 12 of the motor 1.

The rotor core 32 is formed by laminating a plurality of annular magnetic steel sheets. That is, the rotor core 32 is in the form of a laminate of a plurality of steel sheets. The plurality of steel sheets may be engaged with each other by dowels or the like. In the present embodiment, the plurality of steel sheets forming the rotor core 32 include a plurality of types of steel sheets, but hereinafter, these are also simply referred to as "steel sheets 120" unless otherwise distinguished.

The permanent magnet 61 is embedded in the rotor core 32. That is, the rotor core 32 has the magnet hole 121 penetrating in the axial direction, and the permanent magnet 61 is inserted and fixed in the magnet hole 121.

The magnet holes 121 may be arranged symmetrically with respect to a d-axis (denoted as d-axis in FIG. 2 and the like) in a manner that the rotor core 32 is separated into a first portion 3211 on the radially outer side and a second portion 3212 on the radially inner side. The first portion 3211 is supported by the second portion 3212 via three bridges 41 and 43. Hereinafter, the bridge 41 is also referred to as "outer circumferential bridge 41". Note that the first portion 3211 and the outer circumferential bridge 41 form an outer circumferential surface 329 of the rotor core 32.

In the present embodiment, the axial end face of the rotor core 32 may be formed of one steel sheet 120. That is, in the present embodiment, a member such as an end plate that covers both end faces of the rotor core 32 does not need to be provided at the axial end of the rotor core 32. In this case, the steel sheet 120 is exposed at the axial end face of the rotor 30.

As illustrated in FIG. 2, the rotor core 32 is rotationally symmetric about the rotation axis 12 when viewed in the axial direction. In the example illustrated in FIG. 2, the permanent magnets 61 in the individual sets overlap every time the rotor core 32 rotates 45 degrees about the rotation axis 12.

The plurality of permanent magnets 61 may be formed of neodymium or the like. The plurality of permanent magnets 61 may be sintered magnets. In a modification, some or all of the plurality of permanent magnets 61 may be formed of a bonded magnet material. In the present embodiment, as an example, in the plurality of permanent magnets 61, the permanent magnets 61 are arranged in pairs as viewed in the axial direction, as illustrated in FIG. 2. In this case, a magnetic pole is formed between the pair of permanent magnets 61. Note that the plurality of permanent magnets 61 are arranged in a manner that S poles and N poles alternately appear in the circumferential direction. Note that, in the present embodiment, the number of magnetic poles is eight, but any number of magnetic poles is possible.

Note that, FIG. 1 illustrates the motor 1 with a specific structure, but the structure of the motor 1 is not limited to such a specific structure. For example, in FIG. 1, the rotor shaft 34 is hollow, but may be solid. In addition, the permanent magnet 61 may be divided into two layers or three or more layers on the radially inner side and the radially outer side, and may be disposed in a manner that the individual layers form pairs with respect to the d-axis.

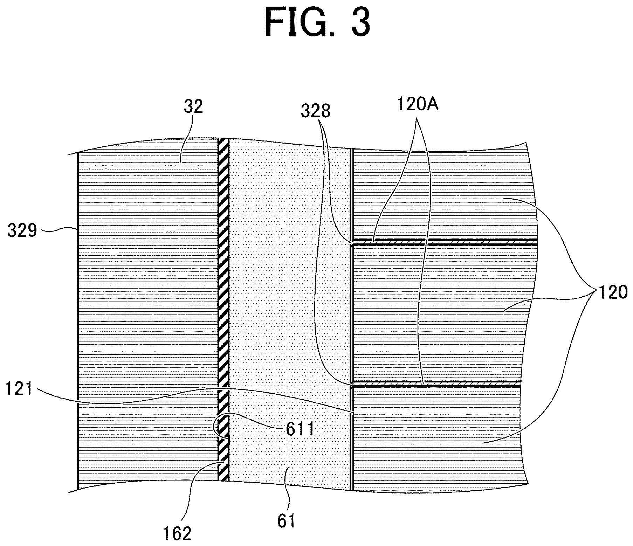

Next, the permanent magnet 61 and the magnet hole 121 of the rotor core 32 will be described in more detail with reference to FIG. 3 and subsequent drawings. In the following, a configuration related to one magnetic pole will be described, but a configuration related to the other magnetic pole may be similar to the configuration.

In the following description, as illustrated in FIG. 6A to be described later, the side surface 610 of the permanent magnet 61 refers to a magnet side surface on both sides in the direction intersecting the d-axis in the permanent magnet 61. In this case, the side surfaces 610 on both sides of the permanent magnet 61 refer to two side surfaces 610. Of the side surfaces 610 on both sides of the permanent magnet 61, the side surface closer to the outer circumference is also referred to as "outer circumferential-side surface 6101", and the side surface closer to the d-axis is also referred to as "d-axis side surface 6102".

The radially outer surface 611 (hereinafter, also referred to as "outer surface 611") of the permanent magnet 61 is a surface on which a radial line passing through the rotation axis 12 intersects on the radially outer side among two surfaces other than the side surfaces 610. The radially inner surface 612 (hereinafter, "inner surface 612") of the permanent magnet 61 is a surface on which a radial line passing through the rotation axis 12 intersects on the radially inner side among two surfaces other than the side surfaces 610.

Furthermore, the longitudinal direction of the permanent magnet 61 corresponds to a direction perpendicular to the side surfaces 610 on both sides of the permanent magnet 61, and the width direction of the permanent magnet 61 is a direction perpendicular to the longitudinal direction of the permanent magnet 61 as viewed in the axial direction.

Moreover, regarding the shape characteristic of the magnet hole 121 (edge portion around the magnet hole 121 of the rotor core 32), a radially outer edge portion 1213 refers to an edge portion facing the outer surface 611 of the permanent magnet 61 in the width direction of the permanent magnet 61, and a radially inner edge portion 1214 refers to an edge portion facing the inner surface 612 of the permanent magnet 61 in the width direction of the permanent magnet 61. The radially outer edge portion 1213 bounds a part of the radially inner side of the first portion 3211. The radially inner edge portion 1214 bounds a part of the radially outer side of the second portion 3212. Note that, in addition, an edge portion 1211 is an edge portion facing the outer circumferential-side surface 6101 of the permanent magnet 61 in the longitudinal direction of the permanent magnet 61. The edge portion 1211 is located between the radially outer edge portion 1213 and the radially inner edge portion 1214 and bounds the outer circumferential bridge 41. An edge portion 1212 is an edge portion facing the d-axis side surface 6102 of the permanent magnet 61 in the longitudinal direction of the permanent magnet 61.

FIG. 3 is a cross-sectional view taken along line A-A in FIG. 2. In FIG. 3, for convenience of description, only a steel sheet 120A forming a protrusion 328 among the plurality of steel sheets 120 forming the rotor core 32 is illustrated by hatching different from that of the other steel sheets.

In the present embodiment, the rotor core 32 has the radial protrusion 328 projecting radially outward at the radially inner edge portion 1214 of the magnet hole 121. Note that the radial protrusion 328 does not need to be parallel to the radial direction (radial direction passing through the rotation axis 12), and may project parallel to the width direction of the permanent magnet 61. The radial protrusion 328 may be integrally formed with the rotor core 32 as part of the rotor core 32. For example, the radial protrusion 328 is formed on some (hereinafter, also referred to as "steel sheets 120A" when being distinguished) of the steel sheets 120 forming the rotor core 32. The radial protrusion 328 may be formed during pressing of the steel sheet 120A.

The radial protrusion 328 is provided at one or more positions in the axial direction in the magnet hole 121. The radial protrusions 328 may be provided at equal intervals along the axial direction of the magnet hole 121. That is, the steel sheets 120A may be provided at equal intervals along the axial direction.

In the present embodiment, the permanent magnet 61 has an adhesive layer 162 on the outer surface 611 of the permanent magnet 61. The adhesive layer 162 is firmly bonded to the outer surface 611 of the permanent magnet 61. The adhesive layer 162 has an insulating property. The adhesive layer 162 extends between the outer surface 611 of the permanent magnet 61 and the rotor core 32 in the magnet hole 121. As a result, electrical insulation between the outer surface 611 of the permanent magnet 61 and the rotor core 32 can be reliably obtained.

In particular, in the present embodiment, the adhesive layer 162 bonded to the outer surface 611 of the permanent magnet 61 is bonded to the rotor core 32. That is, the adhesive layer 162 is bonded to the outer surface 611 of the permanent magnet 61 on the radially inner side, and is bonded to the radially inner side surface of the rotor core 32 in the magnet hole 121 on the radially outer side. The adhesive layer 162 is bonded to the rotor core 32 with a bonding force that prevents the permanent magnet 61 from being detached from the magnet hole 121. In addition, the adhesive layer 162 is bonded to the outer surface 611 of the permanent magnet 61 with a bonding force that prevents the adhesive layer from peeling off from the outer surface 611 of the permanent magnet 61.

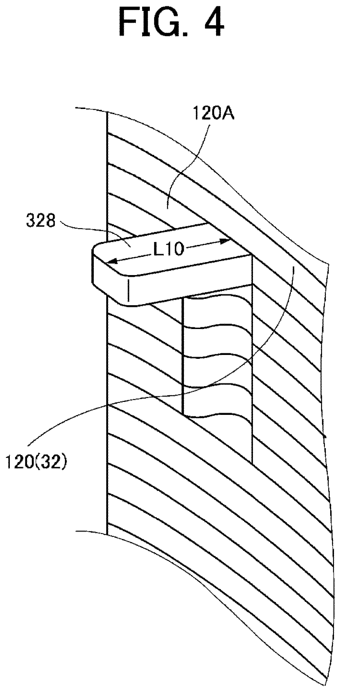

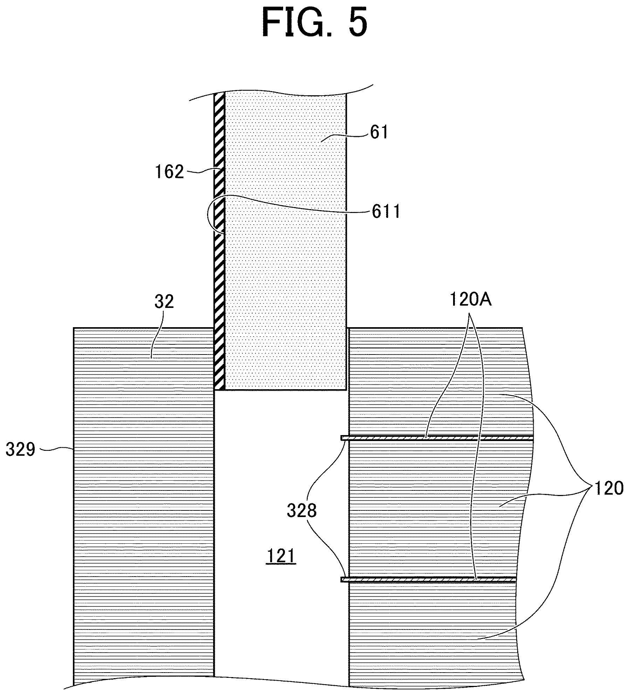

Next, a method of manufacturing the rotor 30 according to the present embodiment will be outlined with reference to FIGS. 4 and 5.

FIG. 4 is an explanatory diagram of the method of manufacturing the rotor 30 according to the present embodiment. FIG. 4 is a perspective view schematically illustrating the radial protrusion 328 before being elastically deformed. FIG. 5 is a diagram illustrating a state of a workpiece during an insertion step in the present manufacturing method.

The present manufacturing method includes an inserting step of inserting the permanent magnet 61 to which a material (adhesive) related to the adhesive layer 162 is applied into the magnet hole 121 of the rotor core 32. As illustrated in FIG. 5, the insertion step involves elastically deforming the protrusion 328. A projection length L10 of the protrusion 328 in a form before elastic deformation (form extending straight in the radial direction) illustrated in FIG. 4 may be appropriately set.

When the insertion step is completed by inserting the permanent magnet 61 to the final insertion position, the permanent magnet 61 receives a radially outward force by the elastically deformed protrusions 328. As a result, the permanent magnet 61 is pressed radially outward in the magnet hole 121 of the rotor core 32 (pressed state), and the permanent magnet 61 is firmly bonded to the rotor core 32 via the adhesive layer 162.

Next, a configuration related to the magnet hole 121 of the rotor core 32 will be described in more detail with reference to FIG. 6A and subsequent drawings.

In the present embodiment, a plurality of specific steel sheets 120B among the plurality of steel sheets 120 forming the rotor core 32 have a welded portion 90 unlike the other steel sheets 120. Hereinafter, the portion of the magnet hole 121 in the steel sheet 120B is referred to as "magnet hole forming portion 121B", and elements related to the shape characteristic may be represented by attaching reference sign B to the end. In addition, hereinafter, a steel sheet 120C refers to any steel sheet other than the steel sheet 120B among the plurality of steel sheets 120. Similarly, the portion of the magnet hole 121 in the steel sheet 120C is referred to as "magnet hole forming portion 121C", and elements related to the shape characteristic may be represented by attaching reference sign C to the end.

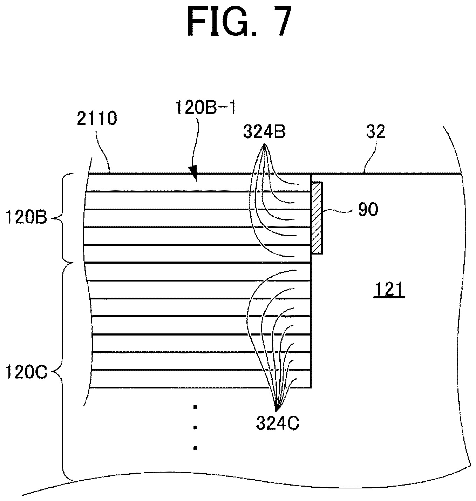

FIG. 6A is an explanatory diagram of the magnet hole forming portion 121B of the steel sheet 120B including the welded portion 90, and is a cross-sectional view illustrating a configuration (detailed configuration of a range Q1 in FIG. 2) at one magnetic pole of the steel sheet 120B together with the permanent magnet 61. FIG. 6A corresponds to a cross-sectional view through the thickness center of the steel sheet 120B taken along a plane perpendicular to the axial direction. FIG. 6B is a cross-sectional view illustrating a configuration (detailed configuration of the range Q1 in FIG. 2) at one magnetic pole of the steel sheet 120C (steel sheet 120 other than the steel sheet 120B) not including the welded portion 90 together with the permanent magnet 61. FIG. 6B corresponds to a cross-sectional view through the thickness center of the steel sheet 120C taken along a plane perpendicular to the axial direction. FIG. 7 illustrates a part of a cross-section of the rotor core 32 taken along line B-B in FIG. 6A. Note that, in FIG. 6A and the like, illustration of the adhesive layer 162 described above with reference to FIG. 3 is omitted.

As illustrated in FIG. 6A, the steel sheet 120B has a protrusion 322B along the width direction of the permanent magnet 61 at a radially inner edge portion 1214B of the magnet hole forming portion 121B. The protrusions 322B form a pair and face the side surfaces 610 on both sides of the permanent magnet 61 in the longitudinal direction of the permanent magnet 61. That is, among the paired protrusions 322B, the protrusion 322B away from the d-axis faces the outer circumferential-side surface 6101 of the permanent magnet 61, and the protrusion 322B near the d-axis faces the d-axis side surface 6102 of the permanent magnet 61.

As illustrated in FIG. 6B, the steel sheet 120C has a protrusion 322C along the width direction of the permanent magnet 61 at a radially inner edge portion 1214C of the magnet hole forming portion 121C. The protrusion 322C may be the same as the protrusion 322B of the steel sheet 120B described above, and these projections may have the same form so as to exactly overlap each other when viewed in the axial direction.

In the present embodiment, the paired protrusions 322B, 322C function as a guide when the permanent magnet 61 is inserted into the magnet hole 121, and are hereinafter also referred to as "paired guide protrusions 322B, 322C". In this manner, the paired guide protrusions 322B, 322C are formed on the plurality of steel sheets to form two projecting sections extending in the axial direction, and the two projecting sections bound the ends of the insertion space of the permanent magnet 61 (ends in the longitudinal direction of the permanent magnet 61). Note that, in the modification, some of the plurality of steel sheets 120 forming one rotor core 32 do not need to have protrusions corresponding to the guide protrusions 322B and 322C.

In the present embodiment, as illustrated in FIG. 6A, the steel sheet 120B has a projection 324B along the width direction of the permanent magnet 61 at the radially inner edge portion 1214B of the magnet hole forming portion 121B. The projection 324B is disposed closer to the radially outer side (side closer to the outer circumferential bridge 41) than the paired guide protrusions 322B. Note that the projection 324B extends to a flux barrier (cavity) 70 adjacent to the outer circumferential bridge 41 in the magnet hole 121.

The steel sheet 120B preferably has a recess 325B adjacent to the projection 324B when viewed in the axial direction, as illustrated in FIG. 6A. The recess 325B is recessed radially inward, and is adjacent to the projection 324B from the d-axis side. The uneven shape formed by the projection 324B and the recess 325B is preferably continuous with a relatively large corner R interposed therebetween. As a result, as will be described later, it is possible to reduce the influence of stress that may be generated when the welded portion 90 is provided on the projection 324B. Note that, in the modification, the recess 325B may be adjacent to the projection 324B from the outer circumferential bridge 41 side, or may be formed on both sides of the projection 324B.

Two or more steel sheets 120B are continuously laminated in an axially adjacent manner, and the welded portion 90 is provided on the projection 324B. That is, the steel sheets 120B laminated in an axially adjacent manner are joined to each other by welding the projections 324B to each other in the axial direction. Any welding method is possible, but welding using a laser is suitable. Any laser can be used, but an infrared laser, a green laser, or the like may be used.

Here, since the projection 324B extends to the flux barrier 70 in the magnet hole 121, laser irradiation for forming the welded portion 90 is easily performed using the cavity related to the flux barrier. In other words, according to the present embodiment, the welded portion 90 can be easily formed at a portion of the rotor core 32 other than the outer circumferential surface 329 using the flux barrier 70.

Meanwhile, in the present embodiment, the flux barrier 70 adjacent to the outer circumferential bridge 41 and a flux barrier 71 adjacent to the d-axis are formed on both sides of the permanent magnet 61 in the magnet hole 121. In the present embodiment, in the radially inner edge portion 1214, the portion extending to the flux barrier 70 is longer than the portion extending to the flux barrier 71. Therefore, according to the present embodiment, the welded portion 90 can be formed using the relatively long radially inner edge portion 1214 of the flux barrier 70. In particular, in the configuration in which the paired guide protrusions 322B are arranged, the space for forming the welded portion 90 (furthermore, the projection 324B adjacent to the recess 325B) is relatively largely restricted, but the welded portion 90 can be appropriately formed by using the flux barrier 70.

As illustrated in FIG. 6B, the steel sheet 120C may have a projection 324C along the width direction of the permanent magnet 61 at a radially inner edge portion 1214C of the magnet hole forming portion 121C. In this case, as illustrated in FIG. 6B, the projection 324C may be the same as the projection 324B of the steel sheet 120B described above, and these projections may have the same form so as to overlap each other when viewed in the axial direction. Similarly, the steel sheet 120C may have a recess 325C adjacent to both sides of the projection 324C.

Here, in the present embodiment, the steel sheet 120C is different from the steel sheet 120B described above in that the welded portion 90 is not provided. That is, although two or more steel sheets 120C can be continuously stacked in an axially adjacent manner, the projections 324C are not welded to each other. Note that the steel sheet 120C can have substantially the same configuration as the steel sheet 120B except that the welded portion 90 is not provided. In this case, it is possible to commonize a punching die for manufacturing the steel sheet 120B and the steel sheet 120C.

The steel sheets 120B may be all the steel sheets 120 forming one rotor core 32 (that is, the steel sheet 120C does not need to be present), but are preferably part of a plurality of steel sheets 120 forming one rotor core 32. That is, the steel sheets 120B including the welded portion 90 occupy only a part of the plurality of steel sheets 120 forming the rotor core 32.

In this case, two or more steel sheets 120B continuously laminated in an axially adjacent manner preferably form an axial end face of the rotor core 32 as illustrated in FIG. 7. In the example illustrated in FIG. 7, two or more steel sheets 120B continuously laminated in an axially adjacent manner are five steel sheets 120B including the steel sheet 120B (in FIG. 7, denoted by reference numeral "120B-1") forming the axial end face 2110 of the rotor core 32. Although only one side in the axial direction is illustrated in FIG. 7, also on the other side in the axial direction, two or more steel sheets 120B continuously laminated in an axially adjacent manner may be provided to form an axial end face on the other side in the axial direction. In this case, the welded portion 90 can be easily formed by making a laser beam enter from the opening side in the axial direction of the magnet hole 121. That is, as compared with a case where the welded portion 90 is provided near the center in the axial direction of the rotor core 32 or a case where the welded portion 90 is provided over the entire rotor core 32 in the axial direction, the welded portion 90 can be easily formed by laser.

Note that, in the present embodiment, the steel sheet 120A described above with reference to FIGS. 3 to 5 may be a steel sheet different from the steel sheet 120B and the steel sheet 120C. Alternatively, the steel sheet 120A described above may be implemented by any one of the steel sheet 120B and the steel sheet 120C. That is, the protrusion 328 described above may be formed on any one of the steel sheet 120B and the steel sheet 120C.

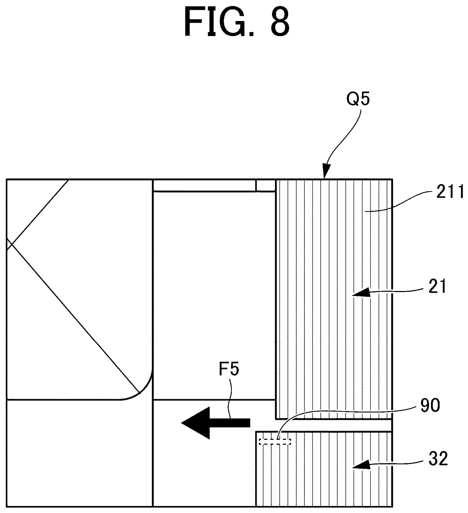

Next, further effects of the present embodiment will be described with reference to FIGS. 8 to 10.

FIG. 8 is an enlarged view of the part Q4 in FIG. 1.

Meanwhile, as described above in the section of "SOLUTIONS TO PROBLEMS", in the rotor core 32 in the form of a laminate of a plurality of steel sheets 120, the repulsive force (see a force F5 in FIG. 8) generated at the axial end acts in a direction of peeling off the steel sheet 120 at the axial end outward in the axial direction. Therefore, in the rotor core in the form of a laminate of a plurality of steel sheets, an end plate that covers the axial end face of the rotor core may be provided in order to prevent the displacement of the steel sheet due to such repulsive force (accompanied by peeling). Note that such an end plate also has a function of preventing the permanent magnet such as the permanent magnet 61 from being detached outward in the axial direction.

In this regard, according to the present embodiment, as described above, the welded portion 90 against the repulsive force (see the force F5 in FIG. 8) can be provided on the steel sheet 120B forming the axial end face 2110 of the rotor core 32. In addition, the permanent magnet 61 is firmly bonded to the rotor core 32 via the adhesive layer 162. Therefore, according to the present embodiment, the end plate can be eliminated, and in this case, the number of components can be reduced and the cost can also be reduced.

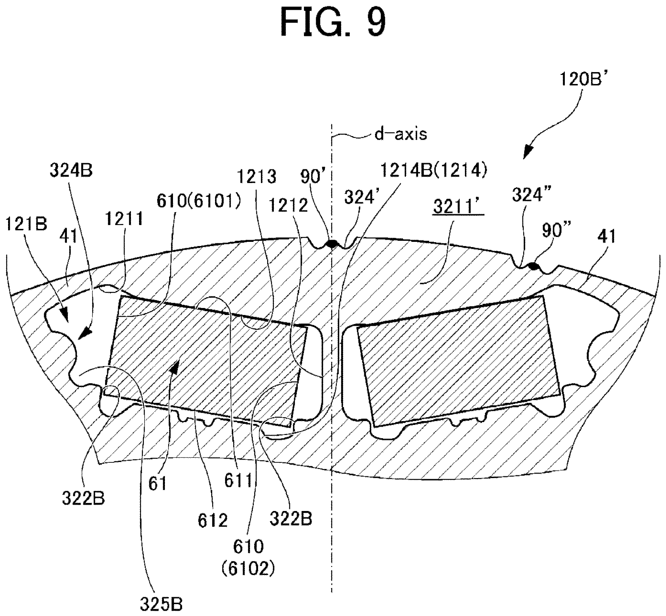

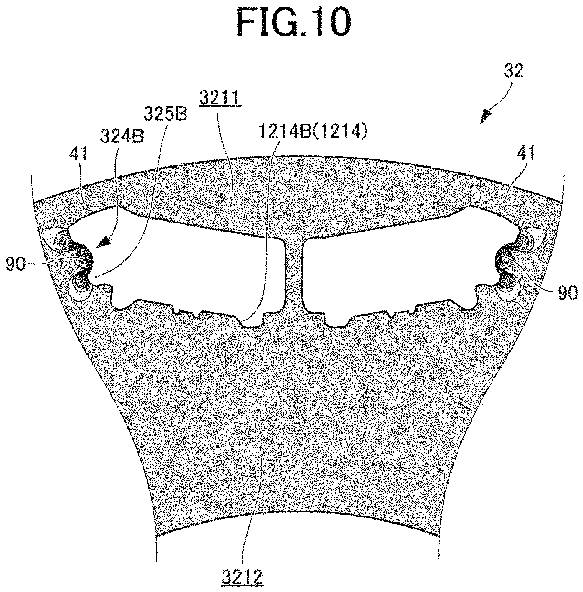

FIG. 9 is an explanatory diagram of welded portions 90' and 90" in a steel sheet 120B' according to a comparative example, and is a cross-sectional view illustrating a configuration of one magnetic pole (detailed configuration of the range Q1 in FIG. 2). FIG. 10 is a contour diagram illustrating a stress analysis result in the rotor core 32 according to the present embodiment.

The welded portions 90' and 90" are respectively provided on projections 324' and 324" with the same form as the projection 324B according to the present embodiment. However, since the welded portion 90" is provided near the outer circumferential bridge 41, there is a problem that stress in the outer circumferential bridge 41 is likely to increase due to thermal contraction at the welded portion 90".

On the other hand, since the welded portion 90' is disposed away from the outer circumferential bridge 41, the stress in the outer circumferential bridge 41 due to the thermal contraction at the welded portion 90' can be reduced compared to the case of the welded portion 90". However, since the welded portion 90' is disposed to affect a magnetic path in a first portion 3211', there is a problem that the torque characteristics of the rotary electric machine deteriorate.

On the other hand, according to the present embodiment, as described above, the welded portion 90 is provided on the second portion 3212 side (radially inner edge portion 1214B) of the rotor core 32, the stress in the outer circumferential bridge 41 due to the thermal contraction at the welded portion 90 can be reduced as compared with the case of the welded portion 90". FIG. 10 illustrates an analysis result showing that a portion where the stress is relatively high does not extend to the outer circumferential bridge 41 and falls within the periphery of the projection 324B. In particular, by providing the recess 325B, stress concentration near the root of the projection 324B can be alleviated, and the influence of stress on the magnetic path of a q-axis magnetic flux in the second portion 3212 can be reduced.

Furthermore, according to the present embodiment, since the welded portion 90 is provided on the second portion 3212 side (radially inner edge portion 1214B) of the rotor core 32, unlike the case of the welded portion 90', the torque characteristics of the rotary electric machine are not deteriorated. In addition, since the projection 324B including the welded portion 90 has a form of projecting radially outward, the projection 324B does not reduce the magnetic path width of the q-axis magnetic flux in the second portion 3212.

As described above, according to the present embodiment, it is possible to provide the welded portion 90 against the repulsive force so as to be capable of reducing the influence of the stress caused by welding.

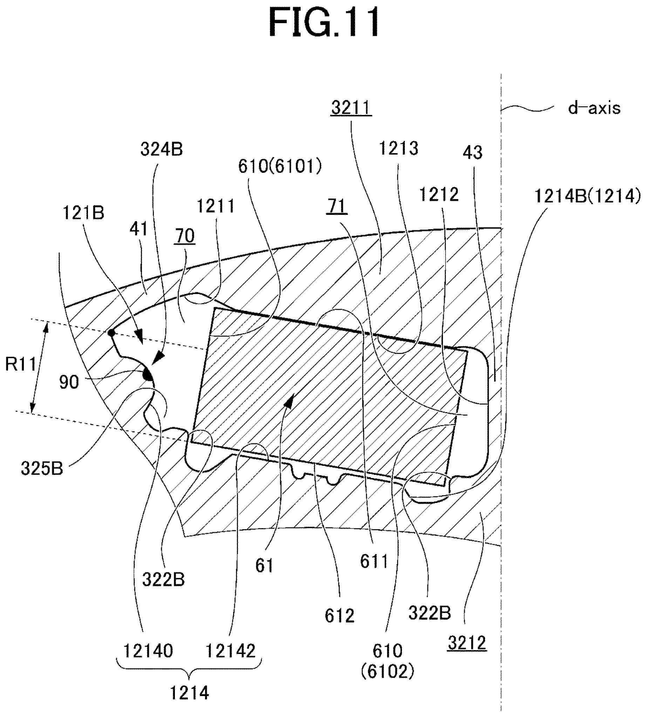

Furthermore, in the present embodiment, the radially inner edge portion 1214 of the magnet hole 121 has, in addition to a magnet facing portion 12142 facing the inner surface 612 of the permanent magnet 61, an end 12140 facing the outer circumferential-side surface 6101 of the permanent magnet 61 in a direction perpendicular to the outer circumferential-side surface 6101. FIG. 11, which is an enlarged view of a part of FIG. 6A, illustrates a range R11 of the end 12140 of the radially inner edge portion 1214 in the magnet hole 121. Note that the radially outer side of the end 12140 terminates at the outer circumferential bridge 41, and the radially inner side terminates at (continues) the magnet facing portion 12142. In the present embodiment, the welded portion 90 is disposed at the end 121 of the radially inner edge portion 1214. As a result, it is possible to prevent a decrease in magnetic flux performance due to thermal strain, as compared with a case where the welded portion 90 is disposed at a portion other than the end 121 of the radially inner edge portion 1214 (that is, the magnet facing portion 12142). This is because the end 121 of the radially inner edge portion 1214 is farther from the main path of the magnetic flux (the main portion of the magnetic path of the q-axis magnetic flux in the second portion 3212) than the portion other than the end 121. This is because, for example, the welded portion 90 can be disposed outside the main path of the magnetic flux.

Note that, in the rotor core 32 according to the embodiment described above, only one permanent magnet 61 is inserted in one magnet hole 121 in the axial direction, but two or more permanent magnets 61 may be inserted in a manner aligned in the axial direction. In this case, the plurality of steel sheets 120 forming one rotor core 32 may include the plurality of steel sheets 120B in such a manner that at least one steel sheet 120B corresponds to each permanent magnet 61, preferably two steel sheets 120B correspond to each permanent magnet 61.

Such a configuration is suitable in a case where the rotor core 32 is formed by rolling a plurality of laminate blocks.

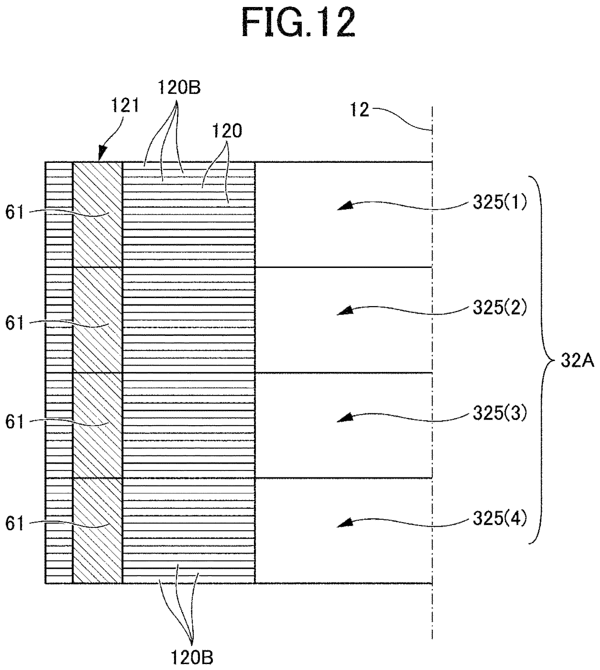

FIG. 12 is an explanatory diagram of a rotor core 32A formed by rolling a plurality of laminate blocks. For example, in the example illustrated in FIG. 12, the rotor core 32A includes four laminate blocks 325(1) to 325(4). Each of the laminate blocks 325(1) to 325(4) includes each of the permanent magnets 61 in a manner separated from each other. In the example illustrated in FIG. 7, two or more steel sheets 120B continuously laminated in an axially adjacent manner form a portion including the axial end face of the upper laminate block 325(1) and a portion including the axial end face of the lower laminate block 325(4) among the plurality of laminate blocks 325(1) to 325(4).

In this case, the rotor core 32A formed by rolling the plurality of laminate blocks 325(1) to 325(4) can have a symmetrical configuration in the axial direction as a whole while combining the laminate blocks 325(1) to 325(4). That is, the rotor core 32A can implement a symmetrical configuration with respect to a plane passing through the center of the rotor core 32A in the axial direction and perpendicular to the axial direction.

Although each embodiment has been described in detail above, it is not limited to a specific embodiment, and various modifications and changes can be made within the scope described in the claims. In addition, all or a plurality of the components of the embodiments described above can be combined.

For example, in the embodiments described above, the paired guide protrusions 322B, 322C are provided, but one or both of the paired guide protrusions 322B, 322C may be omitted.

Furthermore, in the embodiments described above, the projection 324C is also formed on the steel sheet 120C without the welded portion 90, but the projection 324C may be omitted in the steel sheet 120C.

In the embodiments described above, the welded portion 90 is provided on the projection 324B, but in the modification, the welded portion may be provided on the recess 325B or another portion in addition thereto or instead thereof.

In the embodiments described above, the flux barriers 70 and 71 are hollow, but may be filled with resin or the like.

### REFERENCE SIGNS LIST

30: Rotor (Rotor for a rotary electric machine), 32, 32A: Rotor core, 3211: First portion (Radially outer core portion), 3212: Second portion (Radially inner core portion), 329: Outer circumferential surface, 2110: Axial end face, 121: Magnet hole, 322B: Guide protrusion (Protrusion), 61: Permanent magnet (Magnet), 120: Steel sheet, 1211: Edge portion (Third edge portion), 1213: Radially outer edge portion (Second edge portion), 1214: Radially inner edge portion (First edge portion), 324B: Projection, 325B: Recess, 41: Outer circumferential bridge, 70: Flux barrier, and 90: Welded portion

## Claims

1. A rotor for a rotary electric machine comprising: a rotor core in a form of a laminate of a plurality of steel sheets, the rotor core having a magnet hole in an axial direction; and
a magnet inserted in the magnet hole in the axial direction, wherein
two or more steel sheets adjacent to each other in the axial direction among the plurality of steel sheets include a welded portion that joins the steel sheets to each other,
the rotor core includes a radially outer core portion that is located radially outside of the magnet hole and forms an outer circumferential surface of the rotor core, a radially inner core portion that is located radially inside of the magnet hole and has both sides in a circumferential direction extending to the outer circumferential surface of the rotor core, and an outer circumferential bridge that connects the radially outer core portion and the radially inner core portion along an outer circumference of the rotor core,
the magnet hole includes a first edge portion that bounds the radially inner core portion, a second edge portion that bounds the radially outer core portion, and a third edge portion that bounds the outer circumferential bridge when viewed in the axial direction, and
the welded portion is provided in a flux barrier adjacent to the outer circumferential bridge and on the first edge portion in the magnet hole.

2. The rotor for a rotary electric machine according to claim 1, wherein the magnet includes magnet side surfaces on both sides in a direction intersecting a d-axis, a radially outer magnet side surface that abuts on the radially outer core portion, and a radially inner magnet side surface that abuts on the radially inner core portion,
an end of the first edge portion on a side connected to the outer circumferential bridge faces a magnet side surface on a side close to the outer circumferential bridge among the magnet side surfaces on both sides in a direction perpendicular to the magnet side surface, and
the welded portion is provided at the end of the first edge portion.

3. The rotor for a rotary electric machine according to claim 1, wherein the welded portion is provided only on some steel sheets of the plurality of steel sheets, and
the some steel sheets include a steel sheet forming an axial end face of the rotor core.

4. The rotor for a rotary electric machine according to claim 3, wherein an axial end face of the rotor core is exposed without being covered with an end plate.

5. The rotor for a rotary electric machine according to any one of claims 1 to 4, wherein the two or more steel sheets including the welded portion include a projection that projects to the magnet hole and a recess adjacent to the projection, and
the welded portion is provided on the projection.

6. The rotor for a rotary electric machine according to claim 5, wherein at least one or more steel sheets of the plurality of steel sheets include paired protrusions on both sides of the magnet in a direction intersecting the d-axis at the first edge portion of the magnet hole when viewed in an axial direction, and
the projection is located closer to the outer circumferential bridge than the paired protrusions when viewed in the axial direction.
